# EUROPEAN PATENT SPECIFICATION

(11) **EP 1 555 197 B1**
(45) Date of publication and mention of the grant of the patent: **13.01.2010**
(21) Application number: 04257365.9
(22) Date of filing: 26.11.2004
(51) Int. Cl.: B62J 15/00

(54) **Rear fender for a motorcycle**
Hinteres Schutzblech für ein Motorrad
Garde-boue arrière pour une motocyclette

(30) Priority: 27.11.2003 CN 200310117016
(43) Date of publication of application: 20.07.2005
(73) Proprietor: Yamaha Hatsudoki Kabushiki Kaisha, Iwata-shi, Shizuoka 438-8501 (JP)
(72) Inventor: Hsu, Han-Chyuan, Chunli (TW); Peng, Chin-Ching, Chunli (TW); Yang, Sheng-Hsien, Chunli (TW)
(74) Representative: Nicholls, Michael John

(56) References cited:
- FR-A- 2 673 415
- FR-A- 2 748 713
- US-A1- 2003 132 048

## Description

### Background of the Invention

### Field of the Invention

This invention is related to a rear fender for a motorcycle and a motorcycle provided with the same.

### Description of the Prior Art

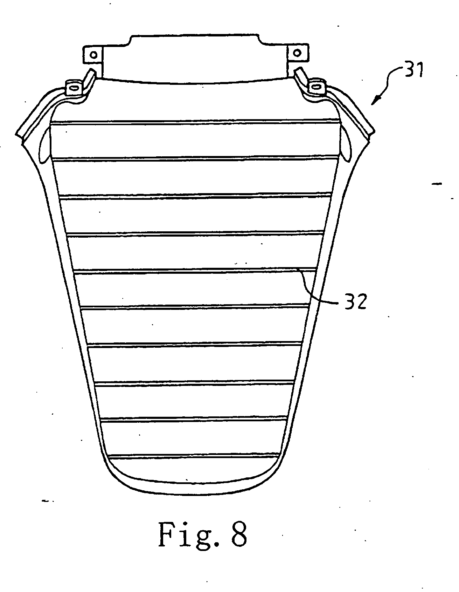

A typical rear fender of a motorcycle, as shown in fig.8, is provided with waterproof ribbed plates (32) on the inner face of the rear fender (31), which are disposed parallel to each other at substantially regular intervals and used for retaining splashed water or mud caused by the forward rotating rear wheels at a high speed when the motorcycle is traveling over the puddles or mud or pits, reducing the chance of the rear vehicle body or the back of the back seat rider and the like getting wet or dirty. Such waterproof ribbed plates (32) in the prior art rear fenders, as shown in fig.8, are formed on the rear fender (31) at an angle of substantially 90° from the inner face of the rear fender (31).

In fact, previous rear fenders as such for motorcycles could not efficiently solve the problem of staining the rear vehicle body or the back of the back seat rider and the like. As a result, it is not only prone to stain the clothes of the motorcycle back seat rider, but also may further violate the functioning thereof, as the splashed mud would adhere to the taillights or the indicator lights and overlay the most parts of the taillights or the indicator lights after a long time, or even may severely affect the safety of riding, for example, at nighttime or in rainy days. Furthermore, for certain motorcycles, the air filter is disposed near to the rear wheels, thus said splashed water or mud tends to hit on the air filter, thereby permeating into air filter and affecting the functioning thereof. For above-mentioned profound problems, no effectual modifications had been proposed to the rear fender of a motorcycle to avoid these previous described problems in the past.

### Summary of the Invention

This invention is to provide an inventive solution by the inventor to the above-described problems. The purpose of this invention is to provide a rear fender for a motorcycle and a motorcycle provided with the same, which can prevent the splashed water or mud in above cases, for example, from staining the rear vehicle body or the back of the back seat rider and the like, affecting the functioning of the taillights or the indicator lights of the motorcycle and permeating into the inside of air filters.

Particularly, the invention of Claim 1 of this invention is a rear fender for a motorcycle, comprising a rear fender, a plurality of waterproof ribbed plates disposed on the inner face of said rear fender and substantially parallel to each other and extending from one end edge of said rear fender to another, characterized in that at least said waterproof ribbed plates disposed on the lower half of said inner face of said rear fender are disposed on said inner face of said rear fender at an angle ranging from 70° to 110° from the substantially horizontal ground when viewed from the side of the vehicle body.

The invention of Claim 2 is the rear fender for a motorcycle according to claim 1, wherein said waterproof ribbed plates are disposed at an angle of 90° with the substantially horizontal ground viewed from the side of the vehicle body.

The invention of Claim 3 is the rear fender for a motorcycle according to Claim 1 or 2, wherein the heights of said waterproof ribbed plates are at least 20 mm.

The invention of Claim 4 is the rear fender for a motorcycle according to Claim 1 or 2, wherein said waterproof ribbed plates are formed with a shape where the central part is higher than both sides, viewed from the front of said rear fender inner face.

The invention of Claim 5 is the rear fender for a motorcycle according to Claim 3, wherein said waterproof ribbed plates are formed with a shape where the central part is higher than both sides, viewed from the front of said rear fender inner face.

The invention of Claim 6 is the rear fender for a motorcycle according to Claim 1 or 2, wherein said waterproof ribbed plates are formed with a shape where the side next to the air filter is lower than the other side, viewed from the front of said rear fender inner face.

The invention of Claim 7 is the rear fender for a motorcycle according to Claim 3, wherein said waterproof ribbed plates are formed with a shape where the side next to the air filter is lower than the other side, viewed from the front of said rear fender inner face.

The invention of Claim 8 is a motorcycle, characterized in that it has the rear fender for a motorcycle according to any one of the Claims 1 to 7.

According to said formation of this invention, by at least disposing the waterproof ribbed plates, which are disposed on the lower half of said rear fender inner face, onto the inner face of said rear fender at an angle ranging from 70°to 110°from the substantially horizontal ground, viewed from the side of the vehicle body, it is possible to protect the rear vehicle body or the back of the back seat rider from getting wet or dirty by the splashed water or mud, and improve the comfort or safety of the rider, while it can also effectively prohibit the water or the mud from permeating into the inside of air filter to guarantee the functionality of the air filter.

### Brief description of the drawings

Figure 1 shows a schematic view of a rear fender for a motorcycle.
Figure 2 shows a front view of the rear fender for a motorcycle according to an embodiment of the invention.
Figure 3 shows a side view of the rear fender for a motorcycle according to an embodiment of the invention.
Figure 4 shows a graph of the relation between the angle of the waterproof ribbed plates formed with the ground and the amount of the splatters.
Figure 5(a) and 5(b) are schematic views of comparison results for splashing simulation test between the rear fender for a motorcycle of the present invention and a prior rear fender for the motorcycle.
Figure 6 shows the pictures of the comparison results of the splashing simulation test between the rear fender for the motorcycle of the present invention and the prior rear fender for the motorcycle.
Figure 7(a) and 7(b) are front views of the rear fender for a motorcycle according to other embodiments of the invention.
Figure 8 is a front view of the prior rear fender for a motorcycle.

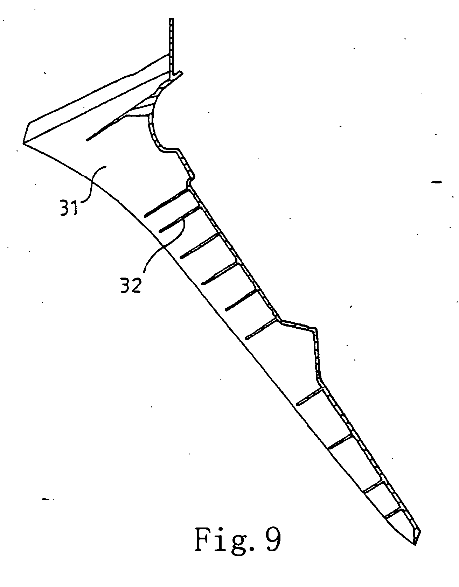

Figure 9 is a side view of the prior rear fender for a motorcycle.

### Detailed Description

The embodiments of the invention will be illustrated in detail with reference to the accompanying drawings.

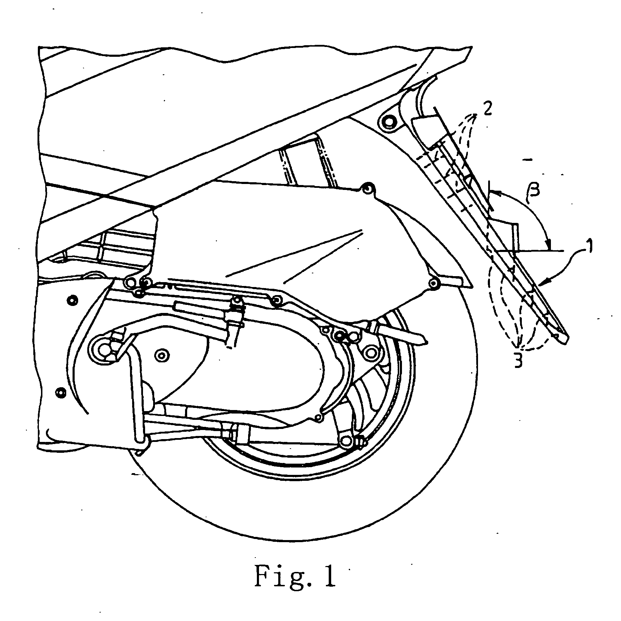

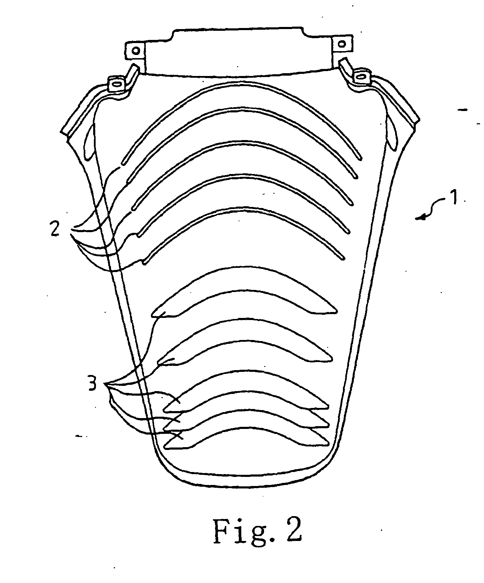

Figure 1 shows a schematic view of a rear fender for a motorcycle. Figure 2 shows a front view of the rear fender for the motorcycle according to an embodiment of the invention. As shown in Fig. 1 and 2, the rear fender for the motorcycle mainly comprises a rear fender (1) and a plurality of waterproof ribbed plates (2,3) which are disposed on the inner face of said rear fender and parallel to each other and extending from one end edge of said rear fender to the other end edge.

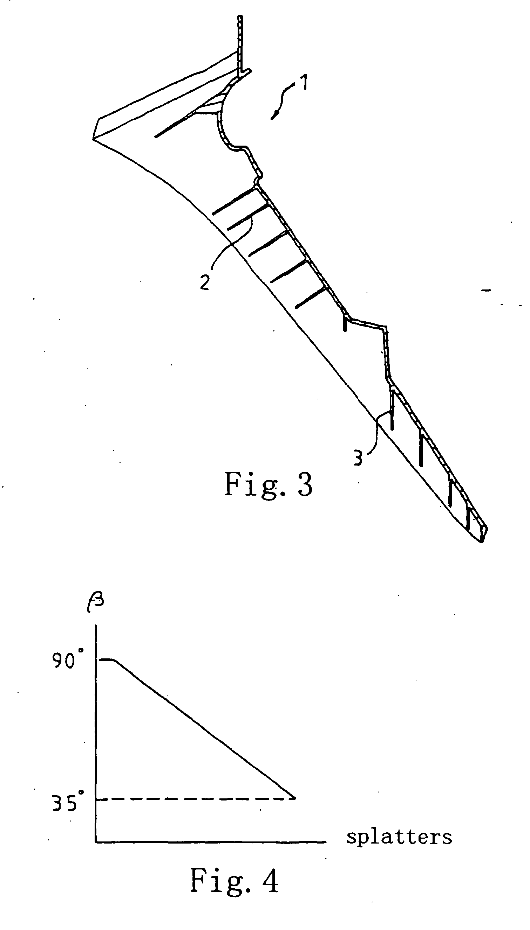

Figure 3 shows the side view of the rear fender for a motorcycle according to an embodiment of the invention. As shown in Fig. 3, in this embodiment, at least part of the waterproof ribbed plates (3) which are disposed on the inner face of said rear fender (1) is disposed on the inner face of said fender (1) at an angle of 90°with the substantially horizontal ground, as viewed from the side of the vehicle body. Through such an arrangement, the splatters and mud splashed onto the rear vehicle body or the back seat rider will be obviously reduced. Such an obvious effect will be illustrated separately in Figs. 4-6 as follows.

Figure 4 is a skeleton view of the relation between an angle β formed by the waterproof ribbed plates (3) as shown in Fig. 1 from the ground and the amount of splatters splashed up over the rear fender (1), in a practical test at the speed of 60km/h. As known in Fig. 4, as viewed from the side of the rear fender (1), the angle β formed by the waterproof ribbed plates and the substantially horizontal ground ranges from 35° to 90 ° ; the lager the angle β is, the less the resultant splatters. Therefore, in the present invention, said waterproof ribbed plates (3) are preferably arranged with an angle β of 90 ° by the waterproof ribbed plates (3) with the substantially horizontal ground, as viewed from the side of the vehicle body. In such an arrangement, the amount of splatters splashed up over the rear fender (1) can be reduced to the minimum.

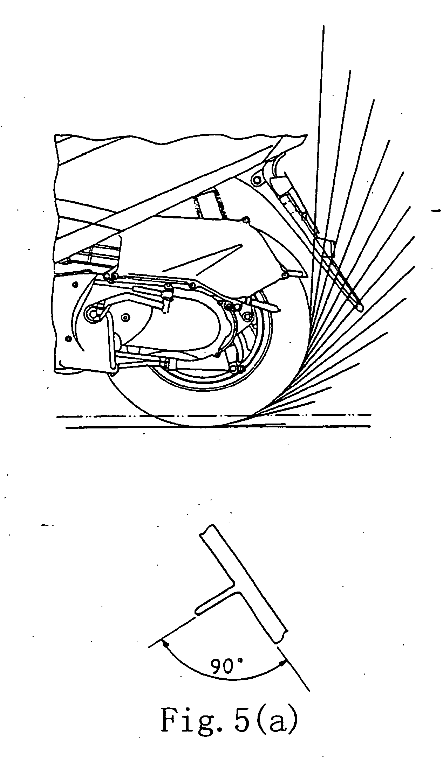

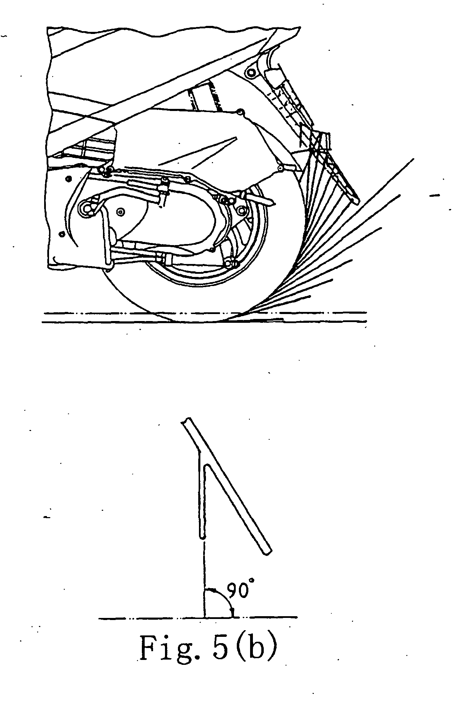

Figures 5(a) and 5(b) are schematic views of comparison results of the splashing simulation test between the rear fender for the motorcycle of the present invention and the prior rear fender. As seen from the test comparison result schematic views of Fig. 5(a) and 5(b), in the case of the prior rear fender for a motorcycle shown in Fig. 5(a), it is difficult for the waterproof ribbed plates (32), which are disposed perpendicular to the inner face of the rear fender (31), to prevent the splatters brought by the fast rotating rear wheel from splashing upwards. Corresponding to the above results, the embodiment shown in Fig. 5(b) can to a large degree prevent the splatters caused by the fast rotating of rear wheels from splashing upwards, since said waterproof ribbed plates (3) are arranged on the inner face of said rear fender (1) with an angle of 90° formed by the waterproof ribbed plates (3) and the substantially horizontal ground.

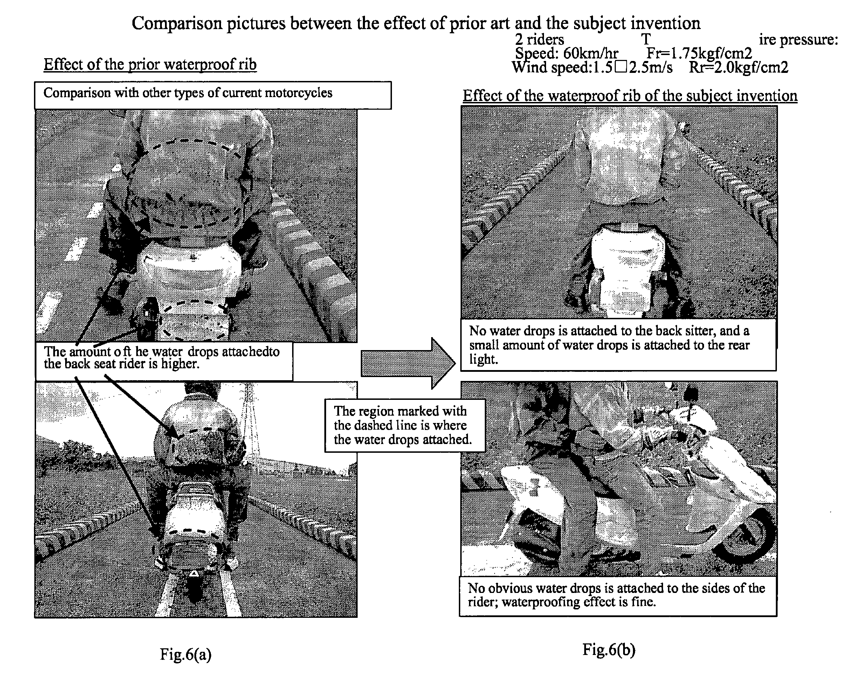

Figure 6 shows the pictures of comparison result of the splashing simulation test between the rear fender for the motorcycle of the present invention and the prior rear fender. It can be further understood from the pictures in Fig. 6 that riding a motorcycle with the prior rear fender and passing a puddle quickly practically would result in that part of the rear vehicle body, such as the taillight, and the clothes of the back of the back seat rider are stained. This result shows that in the case of the prior rear fender for a motorcycle, it is difficult for the waterproof ribbed plates (32) which are disposed perpendicular to the inner face of the rear fender (31) to prevent the splatters brought by the fast rotating of the rear wheels from splashing upwards, which leads to the above result. When one rides the motorcycle with the rear fender for a motorcycle according to the present embodiment and passes a puddle quickly, such rear fender will protect the rear vehicle body and the clothes of the back of the back seat rider substantially from being stained. These comparison pictures has shown that the present invention can to a large extent prevent the splatters caused by the fast rotating rear wheels from splashing upwards, therefore effectively preventing the splatters or mud from staining the rear vehicle body or the back seat rider.

Furthermore, as known from the splashing simulation test result schematic views of the Figs. 5(a) and 5(b), as the upper of the rear wheel is covered by the wheel cover, the splatters splashed up by the rear wheels mostly acts on the lower half of the rear fender (1), and complicates the operation since a complex mold releasing must be conducted when disposing waterproof ribbed plates (2,3); therefore, in the present invention, the waterproof ribbed plates (3) which are disposed on the lower half of the inner face of the rear fender are preferably disposed on the inner face of the rear fender (1) at an angle of 90° from the substantially horizontal ground, as viewed from the side of the rear fender. Thereby, the effect of preventing the rear vehicle body or the back seat rider from being stained can be achieved under minimum operation steps and costs.

Furthermore, in the above described embodiments, as viewed from the side of the vehicle body, the waterproof ribbed plates (3) are disposed on the inner face of the rear fender (1) at an angle of 90°from the substantially horizontal ground, but not limited to this, as viewed from the side of the vehicle body, when the waterproof ribbed plates (3) are disposed on the inner face of the rear fender (1) at an angle ranging from 70° to 110° from the substantially horizontal ground, the substantially good effect of preventing the rear vehicle body or the back seat rider from being stained can also be obtained.

Furthermore, in the above-mentioned embodiments, the width of the waterproof ribbed plates (3) is at least 20 mm, thereby a very good effect can be obtained.

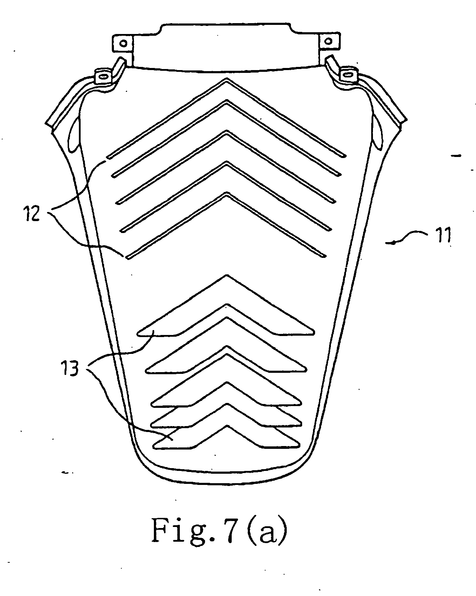

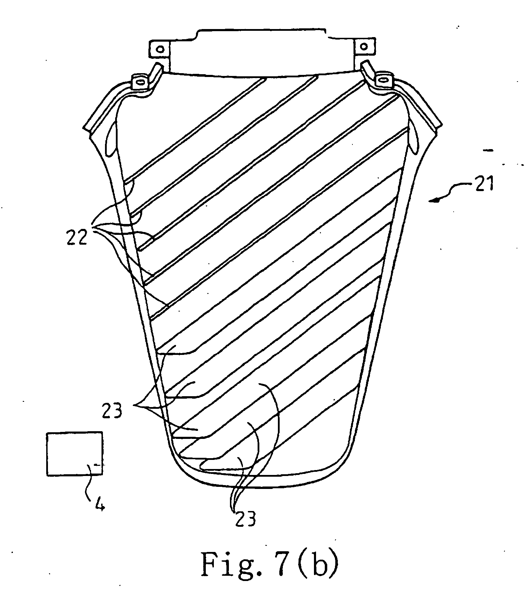

Figures 7(a) and 7(b) are front views of the rear fender for a motorcycle according to other embodiments of the invention. As shown in Fig. 7(a), as viewed from facing the inner face of the fender (1), the waterproof ribbed plates (2,3) are formed with the shape that the two sides are higher than the center, and in said embodiment, an obtuse shape; in such an arrangement, the splatters or muds prevented by the waterproof ribbed plates (2,3) can be guided by the ribbed plates, which are sloped from the two sides to the lower part, to the lower part. Furthermore, as shown in Fig. 7(b), as viewed from facing the inner face of the fender (1), the waterproof ribbed plates (2,3) are formed with the shape that the side near the air filter (4) is lower than the other side. Compared with other couplers such as a muffle, it is not desired for the splatters or muds to penetrate into the air filter and bother its functioning, therefore as viewed from facing the inner face of the fender (1), the waterproof ribbed plates (2,3) are formed with the shape that the side near the air filter (4) is lower than the other side; it is more surely that the splashed splatters or muds can be prevented from entering the inner of the air filter, keeping the function of the air filter unaffected.

## Claims

1. A rear fender for a motorcycle, comprising a fender (1) and a plurality of waterproof ribbed plates (2,3) which are disposed on the inner face of said rear fender (1) and substantially parallel to each other and extending from one end edge of said rear fender (1) to another end edge, **characterized in that** at least said waterproof ribbed plates (2,3) disposed on the lower half of said rear fender inner face are disposed on the inner face of said rear fender at an angle ranging from 70°to 110°from the substantially horizontal ground as viewed from the side of said rear fender.

2. The rear fender for a motorcycle according to claim 1, wherein said waterproof ribbed plates (2,3) are disposed at an angle of 90° from the substantially horizontal ground as viewed from the side of said vehicle body.

3. The rear fender for a motorcycle according to claim 1 or 2, wherein the heights of said waterproof ribbed plates (2,3) are at least 20 mm.

4. The rear fender for a motorcycle according to claim 1 or 2, wherein said waterproof ribbed plates (2,3) are formed with a shape that the central part is higher than both sides as viewed from the front of said rear fender inner face.

5. The rear fender for a motorcycle according to claim 3, wherein said waterproof ribbed plates (2,3) are formed with a shape that the central part is higher than both sides as viewed from the front of said rear fender inner face.

6. The rear fender for a motorcycle according to claim 1 or 2, wherein said waterproof ribbed plates (2,3) are formed with a shape that the side near the air filter is lower than the other side as viewed from the front of said rear fender inner face.

7. The rear fender for a motorcycle according to claim 3, wherein said waterproof ribbed plates (2,3) are formed with a shape that the side near the air filter is lower than the other side as viewed from the front of said rear fender inner face.

8. A motorcycle, **characterized in that** it is provided with the rear fender (1) according to any one of the claims 1 to 7.

## Patentansprüche

1. Ein hinteres Schutzblech für ein Motorrad, umfassend ein Schutzblech (1) und eine Mehrzahl an wasserdichten gerippten Platten (2, 3), die an der inneren Seite des hinteren Schutzblechs (1) angebracht sind, und sich im Wesentlichen parallel zueinander von einer Endkante des hinteren Schutzblechs (1) zur anderen Endkante erstrecken,
**dadurch gekennzeichnet, dass** zumindest die an der unteren Hälfte der inneren Seite des hinteren Schutzblechs angebrachten wasserdichten gerippten Platten (2, 3) - bei seitlicher Betrachtung des hinteren Schutzblechs - in einem Winkel im Bereich von 70° bis 110° zum im Wesentlichen horizontalen Boden an der inneren Seite des hinteren Schutzblechs angeordnet sind.

2. Hinteres Schutzblech für ein Motorrad nach Anspruch 1, **dadurch gekennzeichnet, dass** die wasserdichten gerippten Platten (2, 3) - bei seitlicher Betrachtung des Fahrzeugkörpers - in einem Winkel von 90° zum im Wesentlichen horizontalen Boden angeordnet sind.

3. Hinteres Schutzblech für ein Motorrad nach Anspruch 1 oder 2, **dadurch gekennzeichnet, dass** die Höhen der wasserdichten gerippten Platten (2, 3) mindestens 20 mm betragen.

4. Hinteres Schutzblech für ein Motorrad nach Anspruch 1 oder 2, **dadurch gekennzeichnet, dass** die wasserdichten gerippten Platten (2, 3) in einer solchen Form ausgebildet sind, dass der mittlere Teil - bei Betrachtung von vorn auf die innere Seite des hinteren Schutzblechs - höher als die beiden Seiten ist.

5. Hinteres Schutzblech für ein Motorrad nach Anspruch 3, **dadurch gekennzeichnet, dass** die wasserdichten gerippten Platten (2, 3) in einer solchen Form ausgebildet sind, dass der mittlere Teil - bei Betrachtung von vorn auf die innere Seite des hinteren Schutzblechs - höher als die beiden Seiten ist.

6. Hinteres Schutzblech für ein Motorrad nach Anspruch 1 oder 2, **dadurch gekennzeichnet, dass** die wasserdichten gerippten Platten (2, 3) in einer solchen Form ausgebildet sind, dass die Seite nahe der Luftfilter - bei Betrachtung von vorn auf die innere Seite des hinteren Schutzblechs - niedriger als die andere Seite ist.

7. Hinteres Schutzblech für ein Motorrad nach Anspruch 3, **dadurch gekennzeichnet, dass** die wasserdichten gerippten Platten (2, 3) in einer solchen Form ausgebildet sind, dass die Seite nahe der Luftfilter - bei Betrachtung von vorn auf die innere Seite des hinteren Schutzblechs - niedriger als die andere Seite ist.

8. Ein Motorrad, **dadurch gekennzeichnet, dass** es mit dem hinteren Schutzblech (1) nach einem der Ansprüche 1 bis 7 ausgerüstet ist.

## Revendications

1. Garde-boue arrière pour une motocyclette, comprenant un garde-boue (1) et une pluralité de plaques nervurées étanches à l'eau (2, 3) qui sont disposées sur la face intérieure dudit garde-boue arrière (1) et sensiblement parallèles les unes aux autres et s'étendant depuis un bord d'extrémité dudit garde-boue arrière (1) jusqu'à un autre bord d'extrémité, **caractérisé en ce qu'**au moins lesdites plaques nervurées étanches à l'eau (2, 3) disposées sur la moitié inférieure de ladite face intérieure de garde-boue arrière sont disposées sur la face intérieure dudit garde-boue arrière à un angle variant de 70° à 110° par rapport au sol sensiblement horizontal comme vu depuis le côté dudit garde-boue arrière.

2. Garde-boue arrière pour une motocyclette selon la revendication 1, dans lequel lesdites plaques nervurées étanches à l'eau (2, 3) sont disposées à un angle de 90° par rapport au sol sensiblement horizontal comme vu depuis le côté de ladite carrosserie de véhicule.

3. Garde-boue arrière pour une motocyclette selon la revendication 1 ou 2, dans lequel les hauteurs desdites plaques nervurées étanches à l'eau (2, 3) sont au moins de 20 mm.

4. Garde-boue arrière pour une motocyclette selon la revendication 1 ou 2, dans lequel lesdites plaques nervurées étanches à l'eau (2, 3) sont formées en ayant une forme où la partie centrale est plus haute que les deux côtés comme vu depuis l'avant de ladite face intérieure de garde-boue arrière.

5. Garde-boue arrière pour une motocyclette selon la revendication 3, dans lequel lesdites plaques nervurées étanches à l'eau (2, 3) sont formées en ayant une forme où la partie centrale est plus haute que les deux côtés comme vu depuis l'avant de ladite face intérieure de garde-boue arrière.

6. Garde-boue arrière pour une motocyclette selon la revendication 1 ou 2, dans lequel lesdites plaques nervurées étanches à l'eau (2, 3) sont formées en ayant une forme où le côté près du filtre à air est plus bas que l'autre côté comme vu depuis l'avant de ladite face intérieure de garde-boue arrière.

7. Garde-boue arrière pour une motocyclette selon la revendication 3, dans lequel lesdites plaques nervurées étanches à l'eau (2, 3) sont formées en ayant une forme où le côté près du filtre à air est plus bas que l'autre côté comme vu depuis l'avant de ladite face intérieure de garde-boue arrière.

8. Motocyclette, **caractérisée en ce qu'**elle est munie du garde-boue arrière (1) selon l'une quelconque des revendications 1 à 7.
